# FASCICULE DE BREVET EUROPEEN

(11) **EP 3 163 249 B1**
(45) Date de publication et mention de la délivrance du brevet: **08.08.2018**
(21) Numéro de dépôt: 16196159.4
(22) Date de dépôt: 28.10.2016
(51) Int. Cl.: F42B 3/107, F02K 9/95

(54) **ALLUMEUR POUR PROPULSEUR**
ZÜNDUNGSEINHEIT FÜR TRIEBWERK
IGNITER FOR PROPELLANT

(30) Priorité: 29.10.2015 FR 1502284
(43) Date de publication de la demande: 03.05.2017
(73) Titulaire: Nexter Munitions, 78034 Versailles Cedex (FR); ROXEL France, 33160 Saint Médard en Jalles (FR)
(72) Inventeur: REYNARD, Laurent, 18023 Bourges (FR); PERON, Jean-Luc, 18023 Bourges (FR); MANUEL, Catherine, 18023 Bourges (FR); ZANELLI, Didier, 45000 Orléans (FR); LEVEQUE, Dominique, 18500 Marmagne (FR)
(74) Mandataire: Cabinet Chaillot

(56) Documents cités:
- EP-A2- 0 118 595
- DE-B3-102014 010 179
- US-A- 2 999 460
- US-A- 3 878 786

## Description

Le domaine technique de l'invention est celui des dispositifs d'allumage pour propulseur.

Les propulseurs de missiles sont habituellement allumés par des initiateurs à fil chaud 1 ampère et 1 Watt, qui nécessitent la mise en place de moyens de sécurité mécanique entre l'initiateur et le reste de la chaine pyrotechnique pour être conformes aux normes militaires du STANAG 4368. En revanche, les initiateurs à slappers qui ne contiennent que des explosifs secondaires, initiés par la projection d'un paillet sur l'explosif secondaire, permettent de s'affranchir de la mise en place de sécurités au niveau de l'allumeur. Les dispositifs de sécurité sont alors déportés au niveau de la carte électronique pilotant le déclenchement de l'initiateur.

Il est connu du brevet DE102014010179 un initiateur à slapper dont la carte électronique est déportée et qui comporte un réceptacle contenant un support d'allumage projetant un paillet destiné à initier l'explosif contenu dans le slapper. Afin de favoriser la tenue au choc, le support d'allumage est séparé du fond du réceptacle par un moyen élastique d'absorption des chocs. Le support d'allumage est connecté à une ligne conductrice qui passe au travers d'une ouverture latérale au réceptacle pour pouvoir brancher le slapper sur la carte électronique qui pilote le slapper. On note qu'un joint torique est placé entre le support d'allumage et le réceptacle.

Une fois cet initiateur déclenché, le support d'allumage et toute la chaine pyrotechnique et les structures situées sous ce support sont détruites et peuvent laisser passer les gaz issus de la combustion d'une charge principale déclenchée par l'allumeur décrit. Le simple joint torique ne suffit pas à maintenir l'étanchéité. Dans le cas d'allumage d'un propulseur de missile, ces gaz dont la pression est considérable (environ 40 Méga Pascals) peuvent alors fuir vers l'extérieur du réceptacle via l'ouverture latérale, risquant d'endommager les éléments situés au voisinage de l'initiateur, ce qui peut entrainer des problèmes de sécurité ou de fiabilité jusqu'à la fin du fonctionnement du propulseur. La durée de fonctionnement du propulseur est de quelques dixièmes de secondes à plusieurs centaines de secondes jusqu'à la fin du vol du missile, durée pendant laquelle l'initiateur est soumis à la pression des gaz.

L'invention propose de résoudre ce problème de fuite à une pression élevé de l'ordre de 40 Méga Pascals, d'un allumeur à slapper pour propulseur. En outre l'invention permet selon un mode de réalisation :
- d'éviter des courts circuits associés à une mise en contact de la ligne d'allumage avec le réceptacle de l'allumeur ;
- de rendre l'allumeur hermétique et étanche en stockage pour sa durée de vie.

L'invention a pour objet un allumeur pour propulseur comportant un réceptacle comportant au moins une ouverture traversée par une ligne conductrice connectée à un support d'allumage d'un slapper contenu dans le réceptacle, allumeur caractérisé en ce qu'au moins un matériau élastomère est disposé entre le support d'allumage et l'ouverture de manière à ce que la pression des gaz générés par le propulseur allumé pousse le matériau élastomère au voisinage de l'ouverture du réceptacle afin que ce matériau élastomère bouche l'ouverture et empêche toute fuite de gaz par cette ouverture.

Avantageusement, le matériau élastomère est un élastomère de silicone.

Avantageusement, la connexion entre la ligne conductrice et le support d'allumage est assurée par des broches conductrices permettant de disposer la ligne conductrice à distance du support d'allumage.

Avantageusement, les broches traversent une plaque séparatrice située entre la ligne conductrice et le support d'allumage, le matériau élastomère étant au moins situé entre la plaque séparatrice et la ligne conductrice, plaque séparatrice arrangée de manière à se comporter en piston sous la pression des gaz du propulseur de manière à appliquer une force homogène sur le matériau élastomère.

Avantageusement, l'allumeur comporte au moins une couche de matériau élastomère entre la ligne conductrice et un couvercle du réceptacle, le matériau élastomère pouvant envelopper la ligne conductrice ou remplir l'espace laissé libre de part et d'autre de cette ligne conductrice pour éviter tout contact de la ligne conductrice avec le réceptacle.

Avantageusement, la ligne conductrice est noyée dans une couche monobloc de matériau élastomère.

Selon un mode particulier de réalisation, le matériau élastomère pourra boucher l'ouverture avant l'allumage.

L'invention sera mieux comprise à la lumière de la description suivante, description faire en référence aux dessins suivant, dessins dans lesquels :
- La figure 1 représente une vue en coupe longitudinale d'un allumeur selon un premier mode de réalisation de l'invention et avant allumage ;
- La figure 2 représente une vue en coupe longitudinale de ce premier mode de réalisation durant le fonctionnement d'un propulseur allumé ;
- La figure 3 représente une vue en coupe longitudinale d'un allumeur selon un deuxième mode de réalisation de l'invention avant allumage ;
- La figure 4 représente une vue en coupe longitudinale de ce deuxième mode de réalisation durant le fonctionnement d'un propulseur allumé ;
- La figure 5 représente une vue en coupe longitudinale d'un allumeur selon un troisième mode de réalisation de l'invention avant allumage ;
- La figure 6 représente une vue en coupe longitudinale d'un allumeur selon le troisième mode de réalisation durant le fonctionnement d'un propulseur allumé.

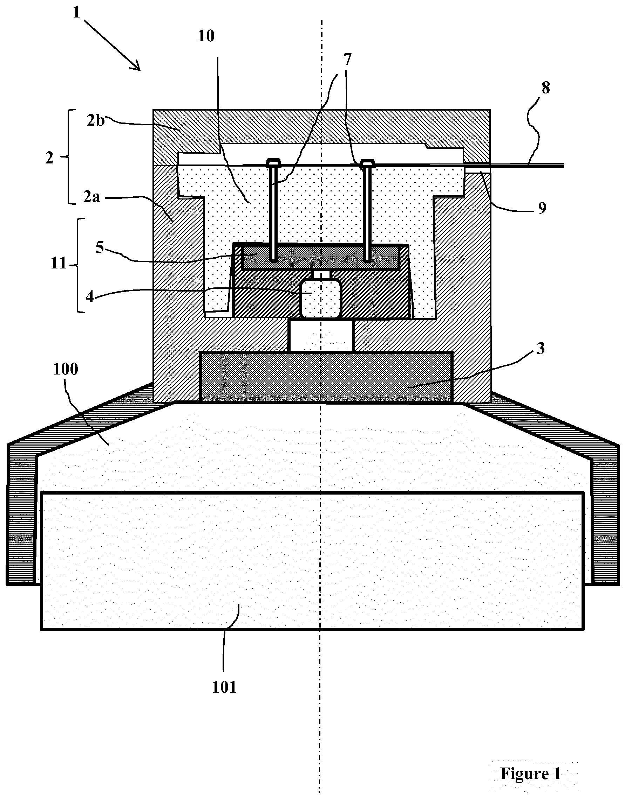

Selon la figure 1, une extrémité d'un propulseur 100 de missile contient une charge propulsive 101 destinée à être allumée par un allumeur 1. L'allumeur 1 comporte un réceptacle 2, divisé pour des facilités de fabrication, en une partie basse 2a, débouchant vers la charge propulsive 101, et un couvercle 2b couvrant cette partie basse 2a. Selon une chaine pyrotechnique classiquement connue de l'Homme du Métier, la partie basse 2a contient une charge relais d'inflammation 3 qui est destinée à provoquer l'allumage de la charge propulsive 101, cette charge relais 3 est elle-même allumée par un initiateur 11 de type slapper comprenant un explosif secondaire 4.

L'explosif 4 est initié par un paillet qui est projeté par un support d'allumage 5 du slapper 11.

Le déclenchement du slapper 11 est commandé par une décharge électrique communiquée au support d'allumage 5 via des broches conductrices 7 connectées à une ligne conductrice 8 chargée d'acheminer une impulsion électrique depuis une carte électronique de commande embarquée sur le missile (carte et missile non visibles).

Cette ligne conductrice 8 passe à travers une ouverture 9 du réceptacle 2. Pour des facilités de réalisation, cette ouverture 9 est pratiquée au niveau du plan de joint entre le couvercle 2b et la partie basse 2a du réceptacle 2. Le couvercle 2b et la partie basse 2a du réceptacle sont assemblés avec des moyens connus de l'Homme du Métier tel que par vissage par exemple.

Au moins une couche d'un matériau élastomère 10 est disposée entre la ligne conductrice 8 et le support d'allumage 5. Ce matériau élastomère 5 pourra par exemple être un élastomère de silicone.

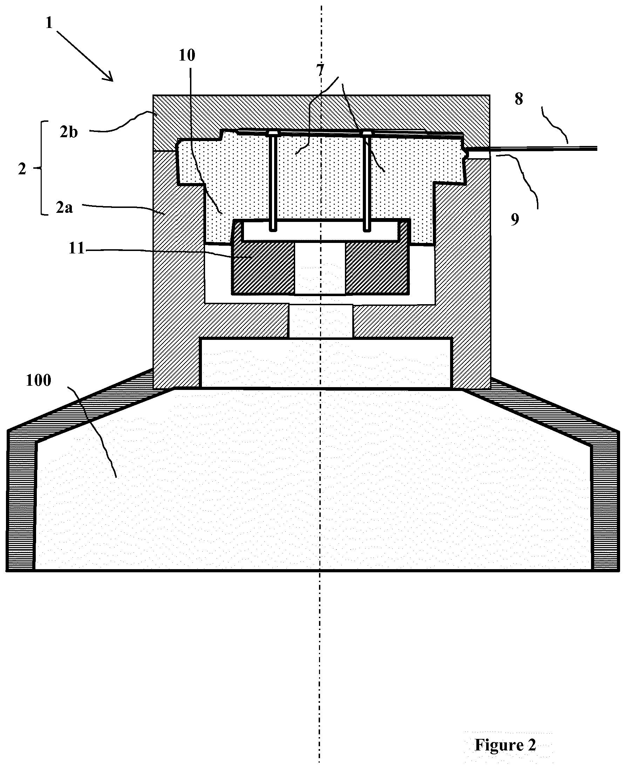

Ainsi, selon la figure 2, lorsque l'allumeur 1 allume la charge propulsive 101, toute la chaine pyrotechnique précédemment décrite (relais 3 et explosif 4) est détruite laissant la libre communication du gaz engendré par la charge propulsive 101 entre l'intérieur du propulseur 100 et l'intérieur de l'allumeur 1.

La pression des gaz s'exerce alors sur le matériau élastomère 10 qui est comprimé entre les gaz d'un côté et les parois internes du réceptacle 2 de l'autre côté. Le caractère déformable de l'élastomère a pour effet de le faire fluer pour boucher l'ouverture 9 empêchant ainsi toute fuite des gaz vers l'extérieur de l'allumeur. En outre cette aptitude à la déformation de l'élastomère 10 sous pression empêche la fissuration ou la rupture de l'élastomère 10, conservant ainsi l'étanchéité aux gaz, et ceci même en considérant d'autres contraintes mécaniques éventuelles appliquées à l'allumeur telles que des vibrations ou des chocs.

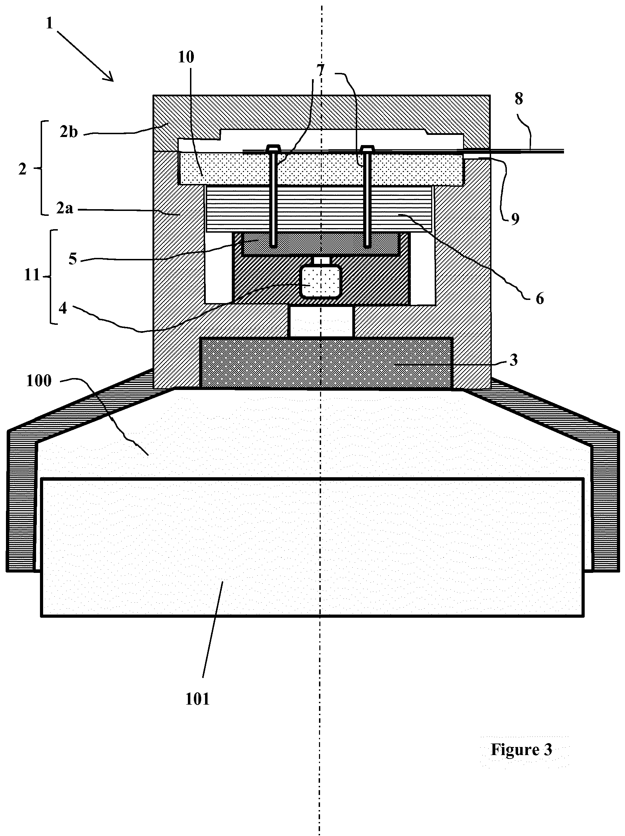

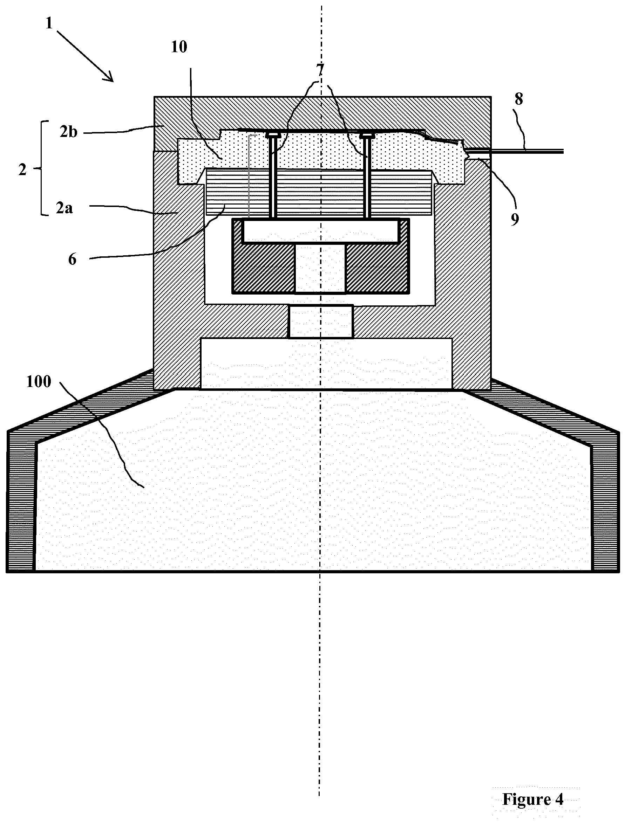

Selon un deuxième mode de réalisation illustré à la figure 3, une plaque séparatrice 6 rigide est placée entre la couche d'élastomère 10 et la plaque d'allumage 5. Lors de l'allumage de la charge propulsive 101 du propulseur 100 (figure 4) les gaz exercent alors leur pression sur cette plaque séparatrice 6 qui se comporte comme un piston qui va appuyer sur le matériau élastomère 10 en appliquant une force répartie de façon homogène, faisant là encore plaquer le matériau élastomère 10 contre les parois internes du réceptacle 2 jusqu'à ce qu'il bouche l'ouverture 9.

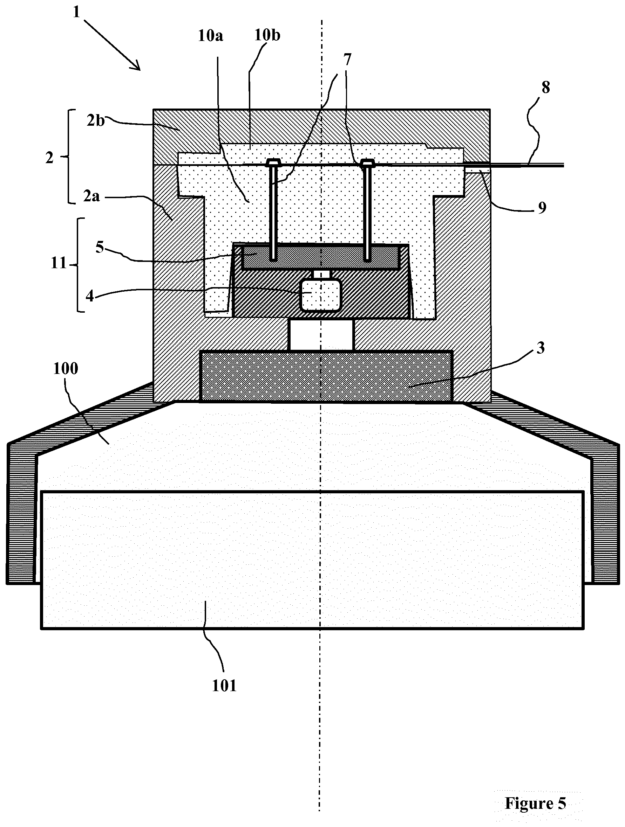

La figure 5 montre un troisième mode de réalisation de l'invention dans lequel une autre couche 10b d'un matériau élastomère est disposée entre la ligne conductrice 8 et le couvercle 2b.

On pourra ainsi prévoir deux couches de matériau élastomère 10a et 10b. On pourra également noyer la ligne conductrice 8 dans un seul bloc 10 de matériau élastomère. Pour cela le matériau élastomère 10 pourra être coulé à partir d'un trou de remplissage aménagé dans le couvercle 2b puis obturé par un bouchon approprié (non représenté).

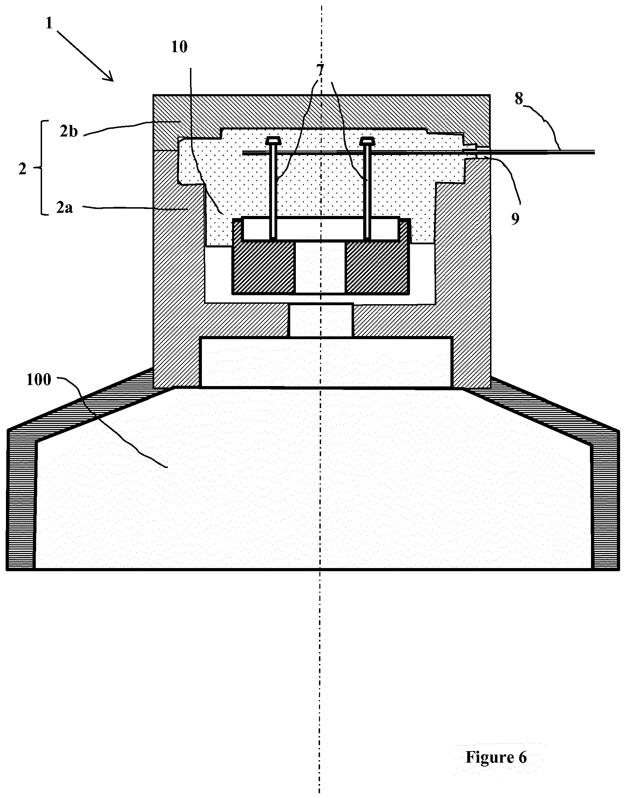

Ainsi l'élastomère 10 se trouve réparti tout autour de la ligne conductrice 8 qui sous la pression des gaz empêche toute fuite de gaz (figure 6).

De plus l'élastomère 10 enveloppe la ligne conductrice 8 empêchant d'éventuelles fuites électriques de cette ligne 8 vers la structure du missile et d'autres équipements du missile.

Selon un mode particulier de réalisation de ces figures 5 et 6, l'élastomère 10 pourra occuper toute la partie supérieure de l'allumeur et pourra également boucher l'ouverture 9 avant l'allumage.

Dans tous les cas l'invention permet donc de garantir qu'aucun gaz propulsif ne fuit par l'allumeur 1.

De plus, si l'élastomère bouche l'ouverture avant l'allumage, il empêche la pénétration de liquide ou de gaz jusqu'au support d'allumage durant le stockage de l'allumeur.

L'aptitude à la déformation de l'élastomère sous pression empêche ainsi la fissuration ou la rupture de ce matériau, conservant ainsi des performances d'étanchéité aux gaz pendant tout le fonctionnement du propulseur, et ceci malgré les contraintes mécaniques (telles que vibrations et chocs) reçues par l'allumeur.

## Revendications

1. Allumeur (1) pour propulseur (100), ledit allumeur (1) comportant un slapper (11) comprenant un support d'allumage (5), un réceptacle (2) comportant au moins une ouverture (9) traversée par une ligne conductrice (8) connectée audit support d'allumage (5) dudit slapper (11), ledit slapper (11) étant contenu dans le réceptacle (2), allumeur (1) **caractérisé en ce qu'**au moins un matériau élastomère (10) est disposé entre le support d'allumage (5) et l'ouverture (9) de manière à ce que la pression des gaz générés par le propulseur (100) allumé pousse le matériau élastomère (10) au voisinage de l'ouverture (9) du réceptacle (2) afin que ce matériau élastomère (10) bouche l'ouverture (9) et empêche toute fuite de gaz par cette ouverture (9).

2. Allumeur (1) selon la revendication 1, **caractérisé en ce que** le matériau élastomère est un élastomère de silicone.

3. Allumeur (1) selon une des revendications 1 à 2, **caractérisé en ce que** la connexion entre la ligne conductrice (8) et le support d'allumage (5) est assurée par des broches (7) conductrices permettant de disposer la ligne conductrice (8) à distance du support d'allumage (5).

4. Allumeur (1)selon la revendication 3, **caractérisé en ce que** les broches (7) traversent une plaque séparatrice (6) située entre la ligne conductrice (8) et le support d'allumage (5), le matériau élastomère (10) étant au moins situé entre la plaque séparatrice (6) et la ligne conductrice (8), plaque séparatrice (6) arrangée de manière à se comporter en piston sous la pression des gaz du propulseur (100) de manière à appliquer une force homogène sur le matériau élastomère (10).

5. Allumeur (1) selon une des revendications 1 à 4, **caractérisé en ce qu'**il comporte au moins une couche de matériau élastomère (10) entre la ligne conductrice (8) et un couvercle (2a) du réceptacle (2), le matériau élastomère (10) pouvant envelopper la ligne conductrice (8) ou remplir l'espace laissé libre de part et d'autre de cette ligne conductrice (8) pour éviter tout contact de la ligne conductrice (8) avec le réceptacle (2).

6. Allumeur (1) selon une des revendications 1 à 5, **caractérisé en ce que** la ligne conductrice (8) est noyée dans une couche monobloc de matériau élastomère (10).

7. Allumeur (1) selon une des revendications 5 ou 6, **caractérisé en ce que** le matériau élastomère (10) bouche l'ouverture (9) avant l'allumage.

## Patentansprüche

1. Zündeinheit (1) für Triebwerk (100), wobei besagte Zündeinheit (1) einen Slapperzünder (11) umfasst, der einen Zündträger (5) umfasst, wobei ein Behälter (2) mindestens eine Öffnung (9) umfasst, die von einer leitfähigen Leitung (8) durchquert wird, die mit besagtem Zündträger (5) des besagten Slapperzünders (11) verbunden ist, wobei besagter Slapperzünder (11) in dem Behälter (2) enthalten ist, wobei die Zündeinheit (1) **dadurch gekennzeichnet ist, dass** mindestens ein Elastomermaterial (10) zwischen dem Zündträger (5) und der Öffnung (9) angeordnet ist, damit der Druck der Gase, die von dem gezündeten Triebwerk (100) erzeugt werden, das Elastomermaterial (10) in die Nähe der Öffnung (9) des Behälters (2) schiebt, damit dieses Elastomermaterial (10) die Öffnung (9) verstopft und einen Gasaustritt durch diese Öffnung (9) verhindert.

2. Zündeinheit (1) nach Anspruch 1, **gekennzeichnet dadurch, dass** das Elastomermaterial ein Silikonelastomer ist.

3. Zündeinheit (1) nach einem der Ansprüche 1 bis 2, **gekennzeichnet dadurch, dass** die Verbindung zwischen der leitfähigen Leitung (8) und dem Zündträger (5) durch leitfähige Stifte (7) gesichert wird, was es ermöglicht, die leitfähige Leitung (8) entfernt von dem Zündträger (5) anzuordnen.

4. Zündeinheit (1) nach Anspruch 3, **gekennzeichnet dadurch, dass** die Stifte (7) eine Trennplatte (6) durchqueren, die zwischen der leitfähigen Leitung (8) und dem Zündträger (5) gelegen ist, das Elastomermaterial (10) liegt mindestens zwischen der Trennplatte (6) und der leitfähigen Leitung (8), die Trennplatte (6) ist so angeordnet, um sich wie ein Kolben zu verhalten, unter dem Druck der Gase des Triebwerks (100), um eine gleichmäßige Kraft auf das Elastomermaterial (10) auszuüben.

5. Zündeinheit (1) nach einem der Ansprüche 1 bis 4, **gekennzeichnet dadurch, dass** sie mindestens eine Schicht aus Elastomermaterial (10) zwischen der leitfähigen Leitung (8) und einem Deckel (2a) des Behälters (2) umfasst, das Elastomermaterial (10) kann die leitfähige Leitung (8) umhüllen oder den auf beiden Seiten dieser leitfähigen Leitung (8) freigelassenen Raum füllen, um jeden Kontakt der leitfähigen Leitung (8) mit dem Behälter (2) zu vermeiden.

6. Zündeinheit (1) nach einem der Ansprüche 1 bis 5, **gekennzeichnet dadurch, dass** die leitfähige Leitung (8) in einer einteiligen Schicht aus Elastomermaterial (10) versenkt wird.

7. Zündeinheit (1) nach einem der Ansprüche 5 oder 6, **gekennzeichnet dadurch, dass** das Elastomermaterial (10) die Öffnung (9) vor der Zündung verstopft.

## Claims

1. An igniter (1) for propulsion unit (100), wherein said igniter (1) has a slapper (11) comprising an ignition carrier (5), a receptacle (2) having at least one opening (9) through which passes a conducting line (8) connected to said ignition carrier (5) of said slapper (11), said slapper (11) being contained within the receptacle (2), the igniter (1) being **characterised in that** at least one elastomer material (10) is disposed between the ignition carrier (5) and the opening (9) such that the pressure of the gases generated by the propulsion unit (100) which is ignited pushes the elastomer material (10) at the vicinity of the opening (9) of the receptacle (2) so that this elastomer material (10) blocks the opening (9) and avoids any gas leak through this opening (9).

2. The igniter (1) according to claim 1, **characterised in that** the elastomer material is a silicone elastomer.

3. The igniter (1) according to one of claims 1 and 2, **characterised in that** the connection between the conducting line (8) and the ignition carrier (5) is provided by conducting pins (7) allowing to dispose the conducting line (8) away from the ignition carrier (5).

4. The igniter (1) according to claim 3, **characterised in that** the pins (7) pass through a separating plate (6) located between the conducting line (8) and the ignition carrier (5), wherein the elastomer material (10) is at least arranged between the separating plate (6) and the conducting line (8), wherein the separating plate (6) is arranged so as to act as a piston under the pressure of gases of the propulsion unit (100) so as to apply a homogeneous force on the elastomer material (10) .

5. The igniter (1) according to one of claims 1 to 4, **characterised in that** it has at least one layer of elastomer material (10) between the conducting line (8) and a cover (2a) of the receptacle (2), wherein the elastomer material (10) can wrap the conducting line (8) or fill the free space on either side of this conducting line (8) to prevent any contact of the conducting line (8) with the receptacle (2).

6. The igniter (1) according to one of claims 1 to 5, **characterised in that** the conducting line (8) is embedded within a one-piece layer of elastomer material (10) .

7. The igniter (1) according to one of claims 5 and 6, **characterised in** tha the elastomer mateial (10) seals the opening (9) before the ignition.
